# EUROPEAN PATENT APPLICATION

(11) **EP 4 693 502 A1**
(43) Date of publication of application: **11.02.2026**
(21) Application number: 23929361.6
(22) Date of filing: 31.03.2023
(51) Int. Cl.: H01M 4/62, H01M 4/58, H01M 10/42

(54) **SECONDARY BATTERY AND ELECTRONIC APPARATUS**

(71) Applicant: Ningde Amperex Technology Limited, Ningde, Fujian 352100 (CN)
(72) Inventor: HU, Kewen, Ningde, Fujian 352100 (CN)
(74) Representative: Kraus & Lederer PartGmbB
(86) International application number: PCT/CN2023/085340
(87) International publication number: WO 2024/197768

(57) **Abstract**

A secondary battery is provided, including a positive electrode plate, where the positive electrode plate includes a positive electrode current collector, a first material layer, and a second material layer that are stacked; the positive electrode current collector includes a metal layer; the first material layer is disposed between the positive electrode current collector and the second material layer; the first material layer includes first material particles; the first material particle includes a matrix and a carbon coating layer on a surface of the matrix; Dᵥ10 of the first material particles is D₁ µm, where 0.3≤D1≤2.0; and the matrix includes at least one of LiFeₖM(₁₋ₖ)PO₄, where 0≤k≤1, and the M element is selected from at least one of manganese, cobalt, magnesium, calcium, zinc, chromium, or lead. The secondary battery of this application has a low internal resistance and internal resistance growth rate. An electronic apparatus including the secondary battery is further provided.

## Description

### TECHNICAL FIELD

This application relates to the field of energy storage, and specifically, to a secondary battery and an electronic apparatus.

### BACKGROUND

When lithium-ion batteries are pierced by an external object, a short circuit occurs, leading to abnormal heat generation. If a heat generation rate inside the lithium-ion battery is greater than a heat dissipation rate, heat accumulation causes overall temperature rise and accelerates side reactions, potentially leading to thermal runaway of the lithium-ion battery, even fire or explosion in extreme cases.

Currently, in the prior art, a high-adhesion safety coating is usually applied on a positive electrode current collector, such as aluminum foil, to reduce short-circuit points, thereby lowering a heat generation power during a short circuit. However, lithium-ion batteries with high-adhesion safety coating generally have a high internal resistance, and after tests such as high-temperature storage, high-temperature and high-humidity, and thermal shock, an internal resistance growth rate is significantly higher than that of lithium-ion batteries without high-adhesion safety coating. Therefore, a new type of electrode plate needs to be developed and designed to address the issue of high internal resistance growth in lithium-ion batteries with high-adhesion safety coating at a high temperature.

### SUMMARY

In view of the above problems in the prior art, this application provides a secondary battery and an electronic apparatus to reduce the internal resistance and internal resistance growth rate of the secondary battery, thereby improving the electrical performance and lifespan of the secondary battery.

According to a first aspect, this application provides a secondary battery including a positive electrode plate, where the positive electrode plate includes a positive electrode current collector, a first material layer, and a second material layer that are stacked, the positive electrode current collector includes a metal layer, the first material layer is disposed between the positive electrode current collector and the second material layer, the first material layer includes first material particles, the first material particle includes a matrix and a carbon coating layer on a surface of the matrix, and the second material layer includes a positive electrode active material; where Dᵥ10 of the first material particles is D1 µm, where 0.3≤D1≤2.0; and the matrix includes at least one of LiFeₖM(₁₋ₖ)PO₄, where 0≤k≤1, and the M element is selected from at least one of manganese, cobalt, magnesium, calcium, zinc, chromium, or lead.

In the prior art, secondary batteries with a first material layer (safety coating) have a relatively high internal resistance, and after tests such as high-temperature storage, high-temperature and high-humidity, and thermal shock, the internal resistance growth rate is significantly higher than that of secondary batteries without a safety coating, and a high internal resistance growth rate severely impacts the performance and lifespan of the secondary battery. The inventor of this application has found through research that, in secondary batteries with a safety coating, during high-temperature storage, the positive electrode current collector is affected by the first material particles in the first material layer, causing gas to accumulate at an interface between the first material layer and the metal layer, corroding the metal layer and increasing an interface resistance between the first material layer and the metal layer. In addition, the carbon coating layer on the surface of the matrix undergoes increased side reactions at a high temperature, causing the byproducts to accumulate on the matrix surface and within the first material layer, obstructing electron channels and further increasing the internal resistance of the secondary battery. To address this issue, in this application, the particle size of the first material particles in the first material layer is appropriately controlled, enabling a high peel strength between the first material layer and the metal layer, reducing a risk of metal layer exposure of the secondary battery under an external force. The matrix has a high short-circuit resistance, reducing a short-circuit current, improving safety. Further, gas accumulation in the first material layer is effectively reduced and side reactions of the carbon coating layer are minimized, thereby lowering the internal resistance and an internal resistance growth rate of the secondary battery.

In some embodiments, 0.7≤D₁≤1.5. When the Dᵥ10 value of the first material particles is excessively small, the amount of gas accumulated at the interface between the first material layer and the metal layer increases, leading to increased side reactions of the carbon coating layer at a high temperature, which further increases the internal resistance of the secondary battery. When the Dᵥ10 value of the first material particles is excessively large, although large particles can reduce interface side reactions to some extent, a quantity of large particles in the particle distribution is difficult to control, increasing defects in an electrode plate, reducing a yield rate.

In some embodiments, Dᵥ90 of the first material particles is D₂ µm, where 5.0≤D₂≤10.0. When Dᵥ90 value of the first material particles is excessively small, a quantity of small particles in the particle distribution is excessively large, and the quantity of small particles is difficult to control, leading to gas accumulation at the interface between the metal layer and the first material layer at a high temperature and increased side reactions of the carbon coating layer, increasing the internal resistance growth rate of the secondary battery. When the Dv90 value of the first material particles is excessively large, a quantity of large particles in the particle distribution is difficult to control, increasing a quantity of defects in the electrode plate.

In some embodiments, 6.0≤D₂≤8.0. This can further reduce the internal resistance growth rate and improve the yield rate.

In some embodiments, based on a mass of the first material particle, a mass percentage of the carbon coating layer is C%, where 0.1≤C≤3.0. The carbon coating layer can enhance the conductivity of the matrix and prevent the aggregation and growth of the matrix; however, when the amount of the carbon coating layer is excessively high, after high-temperature storage, due to the difference in coefficients of thermal expansion between the carbon coating layer and the matrix, and the decomposition of part of the carbon coating layer by the high-temperature electrolyte, a layer of deposits unevenly adheres to the surface of the of the matrix, reducing contact between the first material particles and increasing the resistance of the secondary battery. The appropriate carbon coating layer amount, in synergy with the particle size, can further significantly reduce the internal resistance and internal resistance growth rate of the secondary battery while improving the safety of the secondary battery.

In some embodiments, 0.5≤C≤2.0. This can further reduce the internal resistance growth rate.

In some embodiments, Dᵥ90 of the first material particles is D₂ µm, and based on the mass of the first material particle, the mass percentage of the carbon coating layer is C%, where 3.0≤D₁×D₂/C≤12.0, 0.7≤D₁≤1.5, 6.0≤D₂≤8.0, and 0.5≤C≤2.0. When the particle size and carbon coating amount of the first material particles satisfy the above relationship, the internal resistance growth rate of the secondary battery can be further reduced.

In some embodiments, 4.7≤D₁×D₂/C≤12.0. This can further reduce the internal resistance growth rate, while achieving a low internal resistance and a high yield rate.

In some embodiments, the matrix includes at least one of lithium iron phosphate or lithium iron manganese phosphate. Lithium iron phosphate and lithium iron manganese phosphate have low electrical conductivity, which may increase a short-circuit resistance, reduce a short-circuit current, and improve safety when the secondary battery short-circuits under an external force.

In some embodiments, the first material layer further includes at least one of inorganic particles, a conductive agent, or a binder. In some embodiments, the inorganic particle includes at least one of aluminum oxide, magnesium oxide, calcium oxide, magnesium hydroxide, boehmite, silicon oxide, or calcium oxide. Inorganic particles can further reduce the short-circuit current during a short circuit of the secondary battery, improving safety.

In some embodiments, based on a mass of the first material layer, a mass percentage of the first material particles is 70% to 85%.

In some embodiments, in the first material layer, a mass ratio of the conductive agent to the binder is 10:1 to 3:1.

In some embodiments, a thickness of the first material layer is 1 µm to 6 µm. When the thickness of the first material layer is within the above range, the secondary battery has a high energy density and safety is ensured.

In some embodiments, the second material layer includes a positive electrode active material, and the positive electrode active material includes lithium cobalt oxide and/or lithium nickel manganese cobalt oxide.

In some embodiments, Dᵥ50 of the positive electrode active material is greater than Dᵥ50 of the first material particles. In some embodiments, Dᵥ50 of the positive electrode active material is D₃ µm, where 4≤D₃≤15. When the Dᵥ50 value of the positive electrode active material is greater than the Dᵥ50 value of the first material particles, a conduction rate of lithium ions in the positive electrode active material is improved, improving rate performance of the secondary battery. Additionally, when D₃ is within the range of 4 to 15, electrode plate coating is facilitated and defects in the electrode plate are reduced.

In some embodiments, the metal layer is an aluminum layer.

In some embodiments, the secondary battery further includes a negative electrode plate, where the negative electrode plate includes a negative electrode active material, and the negative electrode active material includes graphite.

In some embodiments, the first material layer is in direct contact with the metal layer. This facilitates simplifying the process, reducing manufacturing costs, and enhancing electron conduction between the first material layer and the metal layer.

According to a second aspect, this application provides an electronic apparatus, including the secondary battery according to the first aspect.

### BRIEF DESCRIPTION OF DRAWINGS

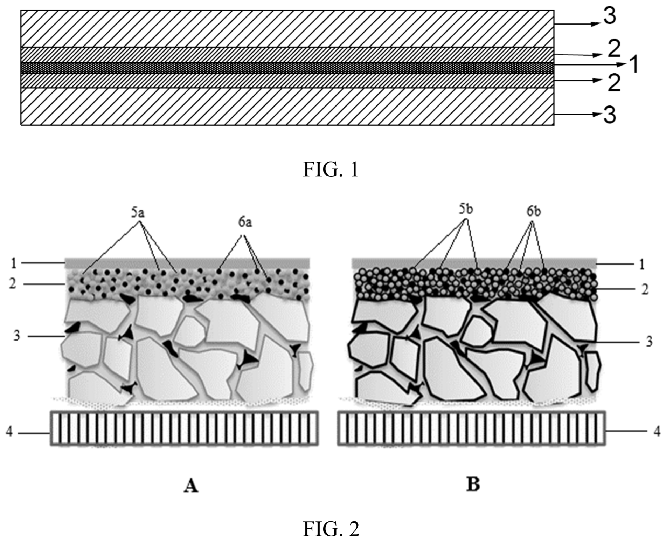

FIG. 1 is a schematic structural diagram of a positive electrode plate in a secondary battery according to some embodiments of this application, where 1 represents a positive electrode current collector, 2 represents a first material layer, and 3 represents a second material layer.
FIG. 2 is a schematic diagram of a high-temperature storage mechanism of a positive electrode plate in a secondary battery in the prior art, where A is a schematic diagram before storage, B is a schematic diagram after storage, 1 represents a positive electrode current collector, 2 represents a first material layer, 3 represents a second material layer, 4 represents a separator, 5a represents first material particles before storage, 5b represents first material particles after storage, 6a represents byproducts before storage, and 6b represents byproducts after storage.

### DETAILED DESCRIPTION

Some embodiments of this application are described in detail below. These embodiments of this application should not be construed as limitations on this application.

In addition, quantities, ratios, and other values are sometimes presented in the format of ranges in this application. It should be understood that such range formats are used for convenience and brevity, and should be flexibly interpreted to include not only the values explicitly specified as the range limits but also all individual values or sub-ranges encompassed within the range, as if each value and sub-range were explicitly specified.

In the specific embodiments and claims, a list of items connected by the terms "at least one of", "at least one", "at least one kind of", or other similar terms may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (excluding C); A and C (excluding B); B and C (excluding A); or all of A, B, and C. Item A may include a single element or multiple elements. Item B may include a single element or multiple elements. Item C may include a single element or multiple elements.

### I. Secondary battery

The secondary battery provided by this application includes a positive electrode plate, where the positive electrode plate includes a positive electrode current collector, a first material layer, and a second material layer that are stacked; the positive electrode current collector includes a metal layer; the first material layer is disposed between the positive electrode current collector and the second material layer; the first material layer includes first material particles; the first material particle includes a matrix and a carbon coating layer on a surface of the matrix; Dᵥ10 of the first material particles is D₁ µm, where 0.3≤D1≤2.0; and the matrix includes at least one of LiFeₖM(₁₋ₖ)PO₄, where 0≤k≤1, and the M element is selected from at least one of manganese, cobalt, magnesium, calcium, zinc, chromium, or lead.

As shown in FIG. 1, some embodiments of this application provide a secondary battery including a positive electrode plate, where the positive electrode plate includes a positive electrode current collector 1 (a surface metal layer is not shown), a first material layer 2, and a second material layer 3. It should be understood that, in FIG. 1, the first material layer is located on two sides of the positive electrode current collector, but this is merely example, and the first material layer 2 and the second material layer 3 may also be located on one side of the positive electrode current collector.

As shown in FIG. 2, in the prior art, before high-temperature storage of a secondary battery, a first material layer contains a small amount of byproducts 6a, and battery performance is not significantly affected. However, after high-temperature storage, a positive electrode current collector 1 is affected by first material particles 5 in a first material layer 2, causing gas to accumulate at an interface between the first material layer 2 and the positive electrode current collector 1, corroding a metal layer and increasing an interface resistance between the first material layer and the metal layer. In addition, a carbon coating layer on a surface of the matrix undergoes increased side reactions at a high temperature, causing the byproducts 6b to accumulate on the matrix surface and within the first material layer, obstructing electron channels and further increasing the internal resistance of the secondary battery. To address this issue, in this application, a particle size of the first material particles in the first material layer is appropriately controlled, enabling a high peel strength between the first material layer and the metal layer, reducing a risk of metal layer exposure of the secondary battery under an external force, and providing a high short-circuit current, improving safety performance. Further, gas accumulation in the first material layer is effectively reduced and side reactions of the carbon coating layer are minimized, thereby lowering the internal resistance and an internal resistance growth rate of the secondary battery.

In some embodiments, the first material layer is in direct contact with the metal layer. This facilitates simplifying the process, reducing manufacturing costs, and enhancing electron conduction between the first material layer and the metal layer.

In some embodiments, D₁ is 0.4, 0.5, 0.6, 0.7, 0.8, 0.9, 1.0, 1.1, 1.2, 1.3, 1.4, 1.5, 1.6 µm, 1.7, 1.8, 1.9, or in a range defined by any two of these values. In some embodiments, 0.7≤D₁≤1.5. When the Dᵥ10 value of the first material particles is excessively small, the amount of gas accumulated at the interface between the first material layer and the metal layer increases, leading to increased side reactions of the carbon coating layer at a high temperature, which further increases the internal resistance of the secondary battery. When the Dᵥ10 value of the first material particles is excessively large, although large particles can reduce interface side reactions to some extent, a quantity of large particles in the particle distribution is difficult to control, increasing defects in an electrode plate.

In some embodiments, Dᵥ90 of the first material particles is D₂ µm, where 5.0≤D₂≤10.0. In some embodiments, D₂ is 5.3, 5.5, 5.7, 6.0, 6.3, 6.5, 6.7, 7.0, 7.3, 7.5, 7.7, 8.0, 8.3, 8.5, 8.7, 9.0, 9.3, 9.5, 9.7, or in a range defined by any two of these values. When Dᵥ90 value of the first material particles is excessively small, a quantity of small particles in the particle distribution is excessively large, and the quantity of small particles is difficult to control, leading to an increased internal resistance growth rate of the secondary battery. When the Dv90 value of the first material particles is excessively large, a quantity of large particles in the particle distribution is difficult to control, increasing a quantity of defects in the electrode plate. In some embodiments, 6.0≤D₂≤8.0.

In some embodiments, 0.7≤D₁≤1.5, and 6.0≤D₂≤8.0.

In this application, Dᵥ50 indicates that 50% of particles in the volume-based particle size distribution have a particle size smaller than this value; Dᵥ10 indicates that 10% of particles in the volume-based particle size distribution have a particle size smaller than this value; and Dᵥ90 indicates that 90% of particles in the volume-based particle size distribution have a particle size smaller than this value.

In some embodiments, based on a mass of the first material particle, a mass percentage of the carbon coating layer is C%, where 0.1≤C≤3.0. In some embodiments, C is 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or in a range defined by any two of these values. In some embodiments, 0.5≤C≤2.0. The carbon coating layer can enhance conductivity of the matrix and prevent the aggregation and growth of the matrix; however, when the amount of the carbon coating layer is excessively high, after high-temperature storage, due to the difference in coefficients of thermal expansion between the carbon coating layer and the matrix, and the decomposition of part of the carbon coating layer by the high-temperature electrolyte, a layer of deposits unevenly adheres to a surface of the first material particles, reducing contact between the first material particles and increasing the resistance of the secondary battery. The appropriate carbon coating layer amount, in synergy with the particle size, can further significantly reduce the internal resistance and internal resistance growth rate of the secondary battery while improving the safety of the secondary battery.

In some embodiments, Dᵥ90 of the first material particles is D₂ µm, and based on the mass of the first material particle, the mass percentage of the carbon coating layer is C%, where 3.0≤D₁×D₂/C≤12.0, 0.7≤D₁≤1.5, 6.0≤D₂≤8.0, and 0.5≤C≤2.0. When the particle size and carbon coating amount of the first material particles satisfy the above relationship, the internal resistance growth rate of the secondary battery can be further reduced. In some embodiments, D₁×D₂/C is 3.5, 4, 4.5, 5, 5.5, 6, 6.5, 7, 7.5, 8, 8.5, 9, 9.5, 10, 10.5, 11, 11.5, or in a range defined by any two of these values. In some embodiments, 4.7≤D₁×D₂/C≤12.0.

In some embodiments, the matrix includes at least one of lithium iron phosphate or lithium iron manganese phosphate. Lithium iron phosphate and lithium iron manganese phosphate have low electrical conductivity, which may increase a short-circuit resistance, reduce a short-circuit current, and improve safety when the secondary battery short-circuits under an external force.

In some embodiments, the first material layer further includes at least one of inorganic particles, a conductive agent, or a binder. In some embodiments, the inorganic particle includes at least one of aluminum oxide, magnesium oxide, calcium oxide, magnesium hydroxide, boehmite, silicon oxide, or calcium oxide. The addition of inorganic particles can increase the short-circuit resistance and improve safety performance.

In some embodiments, based on a mass of the first material layer, a mass percentage of the first material particles is 70% to 85%, for example, 72%, 75%, 77%, 80%, or 83%.

In some embodiments, in the first material layer, a mass ratio of the conductive agent to the binder is 10:1 to 3:1, for example, 4:1, 5:1, 6:1, 7:1, 8:1, or 9: 1.

In some embodiments, a thickness of the first material layer is 1 µm to 6 µm, for example, 2 µm, 3 µm, 4 µm, or 5 µm. When the thickness of the first material layer is within the above range, the secondary battery has a high energy density and safety is ensured.

In some embodiments, the second material layer includes a positive electrode active material, and the positive electrode active material includes lithium cobalt oxide and/or lithium nickel manganese cobalt oxide.

In some embodiments, Dᵥ50 of the positive electrode active material is greater than Dᵥ50 of the first material particles. In some embodiments, Dᵥ50 of the positive electrode active material is D₃ µm, where 4≤D₃≤15, for example, D₃ is 6, 8, 10, 12, or 14. When the Dᵥ50 value of the positive electrode active material is greater than the Dᵥ50 value of the first material particles, a conduction rate of lithium ions in the positive electrode active material is improved, improving rate performance of the secondary battery. Additionally, when D₃ is within the range of 4 to 15, electrode plate coating is facilitated and defects in the electrode plate are reduced.

In some embodiments, the metal layer is an aluminum layer. In some embodiments, the secondary battery further includes a negative electrode plate, where the negative electrode plate includes a negative electrode active material, and the negative electrode active material includes graphite.

In some embodiments, the positive electrode current collector may be a metal foil or a composite current collector. For example, an aluminum foil may be used. The composite current collector may be formed by compounding a metal material (copper, copper alloy, nickel, nickel alloy, titanium, titanium alloy, silver, or silver alloy) onto a polymer substrate.

In some embodiments, the second material layer further includes a binder and a conductive agent. In some embodiments, the binder includes a binder polymer, such as at least one of polyvinylidene fluoride, polytetrafluoroethylene, polyolefin, sodium carboxymethyl cellulose, lithium carboxymethyl cellulose, modified polyvinylidene fluoride, modified SBR rubber, or polyurethane. In some embodiments, the polyolefin binder includes at least one of polyethylene, polypropylene, polyvinyl ester, polyvinyl alcohol, or polyacrylic acid. In some embodiments, the conductive agent includes a carbon-based material, such as natural graphite, artificial graphite, carbon black, acetylene black, Ketjen black, or carbon fiber; a metal-based material, such as metal powder or metal fiber of copper, nickel, aluminum, or silver; a conductive polymer, such as a polyphenylene derivative; or a mixture thereof.

In some embodiments, the secondary battery further includes a negative electrode, where the negative electrode includes a negative electrode active material layer, the negative electrode active material layer includes a negative electrode active material, and the negative electrode active material includes graphite. In some embodiments, the negative electrode active material layer further includes a binder and an optional conductive agent.

In some embodiments, the binder includes at least one of styrene-butadiene rubber, polyacrylic acid, polyacrylate, polyimide, polyamide-imide, polyvinylidene fluoride, polydifluoroethylene, polytetrafluoroethylene, water-based acrylic resin, polyvinyl formal, or styrene-acrylic copolymer resin. In some embodiments, any conductive material can be used as the conductive material as long as it does not cause chemical changes. In some embodiments, the conductive material includes at least one of conductive carbon black, acetylene black, carbon nanotubes, Ketjen black, or graphene.

In some embodiments, the negative electrode further includes a negative electrode current collector, where the negative electrode current collector includes: copper foil, aluminum foil, nickel foil, stainless steel foil, titanium foil, nickel foam, copper foam, a polymer substrate coated with a conductive metal, or any combination thereof.

The secondary battery of this application further includes a separator. A material or shape of the separator used in the secondary battery of this application is not particularly limited and may be based on any technology disclosed in the prior art. In some embodiments, the separator includes a polymer, an inorganic substance, or the like formed by a material stable to the electrolyte of this application.

For example, the separator may include a substrate layer and a surface treatment layer. The substrate layer is a non-woven fabric, film, or composite film with a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be used.

The surface treatment layer is disposed on at least one surface of the substrate layer, and the surface treatment layer may be a polymer layer, an inorganic substance layer, or a layer formed by mixing a polymer and an inorganic substance. The inorganic substance layer includes inorganic particles and a binder. The inorganic particles are selected from at least one of aluminum oxide, silicon oxide, magnesium oxide, titanium oxide, hafnium oxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, a copolymer of vinylidene fluoride-hexafluoropropylene, polyamide, polyacrylonitrile, polyacrylate, polyacrylic acid, polyacrylate salt, polyvinylpyrrolidone, polyethylene oxide, polymethyl methacrylate, polytetrafluoroethylene, or polyhexafluoropropylene. The polymer layer includes a polymer, and a material of the polymer is selected from at least one of polyamide, polyacrylonitrile, acrylate polymer, polyacrylic acid, polyacrylate salt, polyvinylpyrrolidone, polyethylene oxide, polyvinylidene fluoride, or poly(vinylidene fluoride-hexafluoropropylene).

The secondary of this application further includes an electrolyte. The electrolyte that can be used in this application may be an electrolyte known in the prior art.

In some embodiments, the electrolyte includes an organic solvent, a lithium salt, and an optional additive. The organic solvent of the electrolyte in this application may be any organic solvent known in the prior art that can be used as a solvent of the electrolyte. The electrolyte used in the electrolyte of this application is not limited and may be any electrolyte known in the prior art. The additive of the electrolyte according to this application may be any additive known in the prior art that can be used as an additive of the electrolyte. In some embodiments, the organic solvent includes, but is not limited to, ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, such as at least one of 1,3-dioxolane (DOL) or dimethoxyethane (DME). In some embodiments, the lithium salt includes at least one of an organic lithium salt or an inorganic lithium salt. In some embodiments, the lithium salt includes, but is not limited to, lithium hexafluorophosphate (LiPF₆), lithium tetrafluoroborate (LiBF₄), lithium difluorophosphate (LiPO₂F₂), lithium bis(trifluoromethanesulfonyl)imide LiN(CF₃SO₂)₂ (LiTFSI), lithium bis(fluorosulfonyl)imide Li(N(SO₂F)₂) (LiFSI), lithium bis(oxalate)borate LiB(C₂O₄)₂ (LiBOB), or lithium difluoro(oxalate)borate LiBF₂(C₂O₄) (LiDFOB). In some embodiments, the additive includes at least one of fluoroethylene carbonate or adiponitrile.

In some embodiments, the secondary battery of this application includes, but is not limited to, a lithium-ion battery or a sodium-ion battery. In some embodiments, the secondary battery includes a lithium-ion battery.

### II. Electronic apparatus

This application further provides an electronic apparatus, including the secondary battery in the first aspect of this application.

The electronic device or apparatus in this application is not particularly limited. In some embodiments, the electronic device of this application includes, but is not limited to, notebook computers, pen-input computers, mobile computers, e-book players, portable phones, portable fax machines, portable copiers, portable printers, head-mounted stereo headsets, video recorders, liquid crystal display televisions, portable cleaners, portable CD players, mini discs, transceivers, electronic notebooks, calculators, memory cards, portable recorders, radios, backup power supplies, motors, cars, motorcycles, electric power assisted bicycles, bicycles, lighting apparatuses, toys, gaming consoles, clocks, power tools, flashlights, cameras, large household batteries, and lithium-ion capacitors.

In the following examples and comparative examples, all reagents, materials, and instruments used are commercially available unless otherwise specified.

### Examples and comparative examples

### Preparation of lithium iron phosphate material

Lithium iron phosphate is prepared using a solid-phase method, and the process can be divided into three parts.

### 1. Preparation of lithium iron phosphate precursor

Raw materials including iron block, sulfuric acid, phosphoric acid, hydrogen peroxide, and sodium carbonate underwent two reactions, followed by washing and filter pressing, flash drying, and dehydration of ferrous phosphate dihydrate at 500°C to 900°C to produce anhydrous ferric phosphate.

### 2. Secondary processing

(1) Mixing: The precursor iron phosphate was mixed with lithium carbonate or lithium hydroxide, deionized water was added, and a mixture is thoroughly stirred. A protective gas such as nitrogen or argon was introduced, and a mixture was processed at a lower temperature for 1 h to 5 h.
(2) Spray drying: A stirred slurry was sprayed under pressure and transformed into particles through a spray dryer. Spherical particles of a specific size proportion were obtained according to process requirements.
(3) Sintering: Sintering was performed at 550°C to 750°C for 5 h to 20 h to obtain lithium iron phosphate.
(4) Crushing: The sintered lithium iron phosphate was crushed using a jet mill.
(5) Mixing and classification: The crushed lithium iron phosphate was pulverized, mixed, and classified based on particle sizes.
(6) Baking: The qualified lithium iron phosphate was baked to remove moisture.

### 3. Carbon coating

Carbon black, glucose, urea, citric acid, or the like was used as a carbon source. Based on the reducing property of the carbon source at a high temperature, trivalent iron was reduced to divalent iron, while the pyrolyzed carbon coated a surface of lithium iron phosphate. In this way, through carbon coating, a porous carbon film was formed to enhance conductivity, and particle aggregation and growth was prevented.

By adjusting a pressure, flow rate, and size of a spray nozzle of a liquid feed pump in a spray dryer, lithium iron phosphate particles of different sizes could be obtained. An amount of the carbon coating layer could be adjusted by adjusting a mass percentage of the carbon source. A specific surface area of the lithium iron phosphate material could be adjusted by adjusting the particle size of the lithium iron phosphate. A powder resistivity of the lithium iron phosphate material could be adjusted by altering the amount of carbon coating.

### Example 1

### Preparation of positive electrode plate

Lithium iron phosphate, ceramic (boehmite), conductive agent (carbon nanotubes), binder (PAA), and dispersant (CMC-Li) were mixed in a weight ratio of 85:10:3:2 in an appropriate amount of N-methylpyrrolidone (NMP) solvent, and thoroughly stirred to form a uniform first material layer slurry. The slurry was applied on aluminum foil, and dried in vacuum at 80°C, and then cold-pressing was performed so that a thickness of a first material layer was 6 µm, and was used as the first material layer (safety coating).

Next, the positive electrode active material (LiCoO₂), conductive agent (conductive carbon black), and binder (PVDF) were mixed in a weight ratio of 97.5:1:1.5 in an appropriate amount of N-methylpyrrolidone (NMP) solvent, and thoroughly stirred to form a uniform second material layer slurry. The second material layer slurry was applied on a surface of the first material layer to form a second material layer (active material layer).

After drying in a vacuum at 80°C, cold pressing, die-cutting, and slitting were performed to produce a positive electrode plate.

### Preparation of negative electrode plate

The negative electrode active material (graphite), conductive carbon black, binder styrene-butadiene rubber (SBR), and thickener sodium carboxymethyl cellulose (CMC-Na) were mixed in a weight ratio of 95.7:1.5:1.8:1, and thoroughly stirred in an appropriate amount of deionized water solvent to form a uniform negative electrode slurry. The slurry was applied on the current collector Cu foil, dried, and cold-pressed to obtain the negative electrode plate.

### Preparation of electrolyte

In a dry argon atmosphere glove box, ethylene carbonate (EC), propylene carbonate (PC), ethyl methyl carbonate (EMC), and diethyl carbonate (DEC) were mixed in a mass ratio of EC:PC:EMC:DEC = 1:3:3:3, followed by addition of fluoroethylene carbonate and 1,3-propane sultone. After dissolving and thoroughly stirring, lithium salt lithium hexafluorophosphate (LiPF₆) was added, and a mixture was mixed well to obtain an electrolyte. A mass percentage of LiPF₆ was 12.5%, a mass percentage of fluoroethylene carbonate was 2%, and a mass percentage of 1,3-propane sultone was 2%, where the mass percentages of the substances were calculated based on a mass of the electrolyte.

### Preparation of lithium-ion battery

A porous polyethylene (PE) polymer film was selected as a separator, and the above negative electrode plate and positive electrode plate were wound together with the separator, and placed in an aluminum-plastic film, followed by electrolyte injection, standing, and formation to produce a lithium-ion secondary battery.

### Examples 2 to 8, Examples 10 to 24, and Comparative examples 1 and 2

Examples 2 to 23 and Comparative examples 1 and 2 were implemented based on Example 1 by adjusting a pressure, flow rate, and size of a spray nozzle of a liquid feed pump in a spray dryer, a mass percentage of the carbon source, a particle size of lithium iron phosphate, and the like.

### Example 9

Example 9 was implemented based on Example 1 by adjusting the matrix material.

### Test methods

### Test of related parameters of matrix (lithium iron phosphate or lithium manganese iron phosphate)

A fully discharged lithium-ion battery (voltage was less than 3V) was disassembled. A positive electrode was soaked in DMC (dimethyl carbonate) for 20 min, then rinsed once with DMC and acetone sequentially to remove an electrolyte, and placed in an oven at 80°C for 12 h to obtain a processed positive electrode plate. Subsequently, a first material layer (safety coating) was peeled off with tape, and the material was scraped off. The scraped material was processed as follows:
(1) soaking in NMP solvent at 85°C for 4 h;
(2) ultrasonic cleaning for 30 min;
(3) soaking in DI deionized water at 25°C and ultrasonic cleaning for 30 min;
(4) repeating steps 1 to 3 three times; and
(5) drying in an oven at 80°C to obtain a lithium iron phosphate powder material.

The obtained lithium iron phosphate material underwent the following tests.

### 1. Test for particle size

The particle size test method complied with GB/T 19077-2016. The specific process was as follows: 1 g of the sample was mixed well with 20 mL of deionized water and a small amount of dispersant; a mixture was placed in ultrasonic equipment for 5 min, and then poured into an injection system Hydro 2000SM for test. The test equipment used was Malvern Mastersizer 3000. During the test, when the laser beam passed through the dispersed particle sample, the particle size measurement was completed by measuring an intensity of scattered light. The data was then used to analyze and calculate a particle size distribution that formed the scattering spectrum. A particle refractive index used in the test was 1.8. One sample was tested three times, and the particle size was an average of results of the three tests.

### 2. Test for carbon coating layer amount

The carbon coating amount was tested by boiling the sample in a dilute hydrochloric acid solution and drying. According to the principle that carbon is insoluble in hydrochloric acid, lithium iron phosphate and carbon may be separated. M1 g of lithium iron phosphate was added to a dilute hydrochloric acid solution. The mixed solution was boiled on a heating furnace for 30 minutes and filtered with a circulation pump. The solid was dried, and a mass of the residual carbon was M2 g. In this case, carbon coating layer amount=M2/M1×100%.

### Test for related parameters of lithium-ion battery

### 3. Test for lithium-ion battery internal resistance

A resistance meter was used with a sinusoidal 1000 Hz frequency wave to test an alternating current internal resistance of the lithium-ion battery.

### 4. Test for lithium-ion battery internal resistance growth rate

Storage condition (stored at 85°C for 6 h): In an environment of 25±3°C, the lithium-ion battery was charged at a constant current of 0.2C to 4.45 V, and then charged at a constant voltage of 4.45 V to 0.025C. An initial internal resistance of the lithium-ion battery was recorded as IMP0. The lithium-ion battery was placed in a furnace at 85±3°C for 6 h (hour), then was removed. After the lithium-ion battery temperature dropped to 25±3°C, an internal resistance was tested and recorded as IMP6h.

A growth rate of the lithium-ion battery after storage at 85°C for 6 h was calculated as (IMP6h-IMP0)/IMP0×100%.

### 5. Test for quantity of electrode plate defects

After drying the first material layer and before cold pressing, CCD camera inspection was performed at 100 samples along a direction of electrode plate movement. Samples with abnormal protrusions on the electrode plate surface were counted.

### Test results

Table 1 shows impact of the particle size of the lithium iron phosphate material on battery performance, where Dᵥ10 of the lithium iron phosphate material is D₁ µm, Dᵥ90 of the lithium iron phosphate material is D₂ µm, and based on the mass of the lithium iron phosphate material, the mass percentage of the carbon coating layer is C%.

**Table 1**

| Example and comparative example | First material particle | | | | | Battery performance | |
|---|---|---|---|---|---|---|---|
| | Matrix | D₁ (µm) | D₂ (µm) | C (%) | D₁×D₂/C | Internal resistance growth rate (%) | Electrode plate defect quantity |
| Example 1 | Lithium iron phosphate | 0.3 | 7 | 1.5 | 1.4 | 40.3 | 1 |
| Example 2 | Lithium iron phosphate | 0.5 | 7 | 1.5 | 2.3 | 36.2 | 4 |
| Example 3 | Lithium iron phosphate | 0.7 | 7 | 1.5 | 3.3 | 25.8 | 6 |
| Example 4 | Lithium iron phosphate | 1.0 | 7 | 1.5 | 4.7 | 22.9 | 7 |
| Example 5 | Lithium iron phosphate | 1.3 | 7 | 1.5 | 6.1 | 20.8 | 9 |
| Example 6 | Lithium iron phosphate | 1.5 | 7 | 1.5 | 7.0 | 18.5 | 10 |
| Example 7 | Lithium iron phosphate | 1.8 | 7 | 1.5 | 8.4 | 16.1 | 15 |
| Example 8 | Lithium iron phosphate | 2.0 | 7 | 1.5 | 9.3 | 15.3 | 16 |
| Example 9 | Lithium manganese iron phosphate | 1.0 | 7 | 1.5 | 4.7 | 25.1 | 7 |
| Comparative example 1 | Lithium iron phosphate | 0.2 | 7 | 1.5 | 0.9 | 60.3 | 0 |
| Comparative example 2 | Lithium iron phosphate | 2.2 | 7 | 1.5 | 10.3 | 9.1 | 20 |

From the data in Table 1, it can be learned that the Dᵥ10 value of lithium iron phosphate affects the internal resistance growth rate and the quantity of defects in the electrode plate of the lithium-ion battery. When Dᵥ10 is in the range of 0.3 µm to 2.0 µm, the secondary battery has a low internal resistance growth rate while maintaining a small quantity of defects. As shown in the data of Comparative example 1, when the Dᵥ10 value is excessively low, although the coating process can be facilitated and defects in the electrode plate can be reduced, a large amount of gases accumulate at the interface and excessive side reactions of the carbon coating layer occur, resulting in excessively fast internal resistance growth. As shown in the data of Comparative example 2, when the Dᵥ10 value is excessively high, although large particles can reduce the internal resistance growth rate to some extent, the quantity of large particles in the lithium iron phosphate particles is difficult to control, increasing defects in the electrode plate.

Table 2 further investigates the impact of Dᵥ90 of the lithium iron phosphate material on battery performance based on Example 4.

**Table 2**

| Example | Lithium iron phosphate material | | | | Battery performance | |
|---|---|---|---|---|---|---|
| | D₁ (µm) | D₂ (µm) | C (%) | D₁×D₂/C | Internal resistance growth rate (%) | Electrode plate defect quantity |
| Example 4 | 1.0 | 7.0 | 1.5 | 4.7 | 22.9 | 7 |
| Example 10 | 1.0 | 4.5 | 1.5 | 3.0 | 35.6 | 1 |
| Example 11 | 1.0 | 5.0 | 1.5 | 3.3 | 27.9 | 3 |
| Example 12 | 1.0 | 6.0 | 1.5 | 4.0 | 25.7 | 5 |
| Example 13 | 1.0 | 8.0 | 1.5 | 5.3 | 20.2 | 10 |
| Example 14 | 1.0 | 9.0 | 1.5 | 6.0 | 17.6 | 20 |
| Example 15 | 1.0 | 10.0 | 1.5 | 6.7 | 15.4 | 29 |
| Example 16 | 1.0 | 10.5 | 1.5 | 7.0 | 15.0 | 37 |

From the data in Table 2, it can be learned that when the Dᵥ10 value of lithium iron phosphate is in the range of 0.3 µm to 2.0 µm, further controlling the Dᵥ90 value in the range of 5 µm to 10 µm enables the lithium-ion battery to achieve both a small quantity of electrode plate defects and a low internal resistance growth rate. Furthermore, controlling the Dᵥ90 value in the range of 6 µm to 8 µm can comprehensively balance the quantity of electrode plate defects and the internal resistance growth rate within optimal ranges.

Table 3 further investigates the impact of the carbon coating amount of the lithium iron phosphate material on battery performance based on Example 12.

**Table 3**

| Example | Lithium iron phosphate material | | | | Battery performance | |
|---|---|---|---|---|---|---|
| | D₁ (µm) | D₂ (µm) | C (%) | D₁×D₂/C | Internal resistance growth rate (%) | Internal resistance (mΩ) |
| Example 12 | 1.0 | 6.0 | 1.5 | 4.0 | 25.7 | 26.8 |
| Example 17 | 1.0 | 6.0 | 0.05 | 120.0 | 15.1 | 57.6 |
| Example 18 | 1.0 | 6.0 | 0.1 | 60.0 | 17.4 | 47.3 |
| Example 19 | 1.0 | 6.0 | 0.5 | 12.0 | 20.9 | 34.6 |
| Example 20 | 1.0 | 6.0 | 1.0 | 6.0 | 23.6 | 31.8 |
| Example 21 | 1.0 | 6.0 | 2.0 | 3.0 | 27.8 | 25.4 |
| Example 22 | 1.0 | 6.0 | 2.5 | 2.4 | 31.5 | 23.7 |
| Example 23 | 1.0 | 6.0 | 3.0 | 2.0 | 34.9 | 22.4 |
| Example 24 | 1.0 | 6.0 | 3.3 | 1.8 | 44.2 | 21.1 |

From the data in Table 3, it can be learned that controlling the mass percentage of the carbon coating layer in the range of 0.1% to 3.0% enables the lithium-ion battery to have a low internal resistance and internal resistance growth rate. As shown in the data of Example 17, when the carbon coating amount is low, the conductivity improvement of the lithium iron phosphate material is not significant, resulting in a high internal resistance of the lithium-ion battery. As shown in the data of Example 24, when the carbon coating amount is high, excessive interface side reactions lead to a high internal resistance growth rate of the lithium-ion battery. Furthermore, controlling the mass percentage of the carbon coating layer in the range of 0.5% to 2.0% can comprehensively balance the internal resistance and internal resistance growth rate of the lithium-ion battery within an optimal range.

Based on the data from Examples in Tables 1 to 3, it can be concluded that when 3.0≤D₁×D₂/C≤12.0, 0.7≤D₁≤1.5, 6.0≤D₂≤8.0, and 0.5≤C≤2.0, the quantity of electrode plate defects is small, the internal resistance of the lithium-ion battery is low, and the internal resistance growth rate is below 30%. Furthermore, when 4.7≤D₁×D₂/C≤12.0, the internal resistance growth rate can be significantly reduced to below 25%.

Although illustrative embodiments have been shown and described, persons skilled in the art should understand that the above embodiments are not to be construed as limitations on this application, and changes, substitutions, and modifications may be made to these embodiments without departing from the principles and scope of this application.

## Claims

1. A secondary battery, comprising a positive electrode plate; wherein, the positive electrode plate comprises a positive electrode current collector, a first material layer, and a second material layer stacked together; the positive electrode current collector comprises a metal layer, the first material layer is disposed between the positive electrode current collector and the second material layer, the first material layer comprises first material particles, each first material particle comprises a matrix and a carbon coating layer on a surface of the matrix, and the second material layer comprises a positive electrode active material;
Dᵥ10 of the first material particles is D₁ µm, wherein 0.3≤D1≤2.0; and
the matrix comprises at least one of LiFeₖM(₁₋ₖ)PO₄, wherein 0≤k≤1, and the M element is at least one selected from manganese, cobalt, magnesium, calcium, zinc, chromium, or lead.

2. The secondary battery according to claim 1, wherein, 0.7≤D₁≤1.5.

3. The secondary battery according to claim 1, wherein, Dᵥ90 of the first material particles is D₂ µm, wherein 5.0≤D₂≤10.0.

4. The secondary battery according to claim 3, wherein, 6.0≤D₂≤8.0.

5. The secondary battery according to any one of claims 1 to 4, wherein, based on a mass of the each first material particle, a mass percentage of the carbon coating layer is C%, wherein 0.1≤C≤3.0.

6. The secondary battery according to claim 5, wherein, 0.5≤C≤2.0.

7. The secondary battery according to claim 1, wherein, Dᵥ90 of the first material particles is D₂ µm; and based on a mass of the each first material particle, a mass percentage of the carbon coating layer is C%, wherein, 3.0≤D₁×D₂/C≤12.0, 0.7≤D₁≤1.5, 6.0≤D₂≤8.0, and 0.5≤C≤2.0.

8. The secondary battery according to claim 7, wherein, 4.7≤D₁×D₂/C≤12.0.

9. The secondary battery according to claim 1, wherein, the matrix comprises at least one of lithium iron phosphate or lithium manganese iron phosphate.

10. The secondary battery according to claim 1, wherein, the first material layer further comprises at least one of inorganic particles, a conductive agent, or a binder; the inorganic particle comprises at least one of aluminum oxide, magnesium oxide, calcium oxide, magnesium hydroxide, boehmite, silicon oxide, or calcium oxide; and/or
the positive electrode active material comprises lithium cobalt oxide and/or lithium nickel manganese cobalt oxide; and/or
the metal layer is an aluminum layer.

11. The secondary battery according to claim 1, wherein, a thickness of the first material layer is 1 µm to 6 µm; and/or
Dᵥ50 of the positive electrode active material is greater than Dᵥ50 of the first material particles, and Dᵥ50 of the positive electrode active material is D₃ µm, wherein 4≤D₃≤15.

12. The secondary battery according to claim 1, further comprising a negative electrode plate, wherein the negative electrode plate comprises a negative electrode active material, and the negative electrode active material comprises graphite.

13. The secondary battery according to claim 1, wherein, the first material layer is in direct contact with the metal layer.

14. An electronic apparatus, comprising the secondary battery according to any one of claims 1 to 13.
